# EUROPÄISCHE PATENTANMELDUNG

(11) **EP 1 281 589 A2**
(43) Veröffentlichungstag der Anmeldung: **05.02.2003**
(21) Anmeldenummer: 02011401.3
(22) Anmeldetag: 24.05.2002
(51) Int. Cl.: B60R 25/02

(54) **Verriegelungseinrichtung**

(30) Priorität: 25.07.2001 DE 10136221
(71) Anmelder: Conti Temic microelectronic GmbH, 90411 Nürnberg (DE)
(72) Erfinder: Reinwald, Martin, 88682 Salem (DE)
(74) Vertreter: Kolb, Georg

(57) **Zusammenfassung**

Die Erfindung betrifft eine Verriegelungseinrichtung mit einem elektromotorisch angetriebenen Verriegelungsbolzen, bei der zwischen dem Gehäuse der Verriegelungseinrichtung und dem Verriegelungsbolzen ein Freilaufring angeordnet ist, durch den der Verriegelungsbolzen beim Überschreiten seines normalen Arbeitsweges im Gehäuse der Verriegelungseinrichtung eine Drehung ausführt.

## Beschreibung

Die Erfindung betrifft eine Verriegelungseinrichtung gemäß dem Oberbegriff des Patentanspruchs 1, die vorzugsweise zum Verriegeln der Lenkwelle eines Kraftfahrzeuges vorgesehen ist..

Kraftfahrzeuge sind zum Schutz vor Diebstahl in der Regel mit einer Verriegelungseinrichtung der Lenksäule versehen, bei denen ein Verriegelungsbolzen in Aussparungen der Lenksäule greift, wenn der Zündschlüssel des Kraftfahrzeugs abgezogen ist.

Während direkt beim Zündschloß angeordnete Verriegelungseinrichtungen mit dem Kraftfahrzeugschlüssel betätigt werden können, werden vom Zündschloß entfernt an der Lenksäule montierte Verriegelungseinrichtungen über einen mit dem Zündschloß gekoppelten Elektromotor betätigt. Eine derartige Verriegelungseinrichtung, deren Verriegelungsbolzen über einen Elektromotor angetrieben wird, ist beispielsweise in der DE 195 00 682 C1 beschrieben.

Bei derartigen elektronisch gesteuerten Einrichtungen ist es zur Vermeidung von Fehlfunktionen notwendig die für die Sicherheit relevanten Bauteile zu überwachen. So sollte bei einer Verriegelungseinrichtung der Verriegelungsbolzen mit einer Vorrichtung zur Bestimmung seiner Position ausgestattet sein, die den Arbeitsweg des Verriegelungsbolzens überwacht, wie es beispielsweise in der DE 44 46 613 A1 unter Verwendung von Mikroschaltern beschrieben ist.

Diese Vorrichtung zur Bestimmung der Position des Verriegelungsbolzens kann auch zur Steuerung des den Verriegelungsbolzen antreibenden Elektromotors verwendet werden. Dabei wird vermieden, daß der Verriegelungsbolzen über seinen normalen Arbeitsweg hinaus angetrieben wird.

Der Nachteil einer Steuerung des den Verriegelungsbolzen antreibenden Elektromotors über eine Vorrichtung zur Bestimmung der Position des Verriegelungsbolzens ist, daß die Verriegelungseinrichtung bei einem Ausfall der Vorrichtung zur Bestimmung der Position des Verriegelungsbolzens, beispielsweise bei dem Ausfall eines Mikroschalters, mechanisch schwer beschädigt wird.

Der Erfindung liegt die Aufgabe zugrunde eine Verriegelungseinrichtung mit einem sich im Gehäuse der Verriegelungseinrichtung auf einem Arbeitsweg linear bewegenden Verriegelungsbolzen gemäß dem Oberbegriff des Patentanspruchs 1 anzugeben, bei dem die Verriegelungseinrichtung keinen Schaden nimmt, wenn der den Verriegelungsbolzen bewegende Antrieb, beispielsweise aufgrund einer Störung, versucht den Verriegelungsbolzen über seinen Arbeitsweg hinaus zu bewegen.

Diese Aufgabe wird erfindungsgemäß durch die Merkmale in den Kennzeichen des Patentanspruches 1 gelöst.

Demnach ist zwischen dem Verriegelungsbolzen und dem Gehäuse der Verriegelungseinrichtung ein Freilaufring angeordnet, durch den der Verriegelungsbolzen eine Drehung ausführt, wenn der Verriegelungsbolzen seinen normalen Arbeitsweg überschreitet.

Dabei ist vorgesehen, daß der Freilaufring, ohne selbst eine Drehung ausführen zu können, fest mit dem Gehäuse der Verriegelungseinrichtung verbunden ist. An dem Freilaufring sind senkrecht zur Achse des Verriegelungsbolzens zwei sich versetzt gegenüberstehende, federnde Ausformungen ausgebildet. An dem freien Ende der federnden Ausformung ist jeweils eine Stoßfläche ausgebildet, gegen die an dem Verriegelungsbolzen ausgebildete Anschläge stoßen.

Die Anschläge weisen jeweils auf einer Seite eine zur Stoßfläche der federnden Ausformung komplementäre Stoßfläche auf, so daß eine Drehung des Verriegelungsbolzens gegen die federnde Ausformung vermieden wird.

Die anderen Seite der Anschläge sind jeweils als schiefe Ebene ausgebildet, die der federnden Ausformung nicht entgegenstehende kann, so daß eine Drehung des Verriegelungsbolzens nicht vermieden wird. Während einer Drehung des Verriegelungsbolzens unterläuft die schiefe Ebene der Anschläge die federnde Ausformung des Freilaufrings, die sich elastisch verformt und in ihre Ruhestellung zurückschnellt, nachdem sich die als Stoßfläche ausgebildete Seite der Anschläge unter der elastischen Ausformung weggedreht hat.

Der Abstand der versetzt angeordneten, federnden Ausformung ist größer als die Länge der auf dem Verriegelungsbolzen ausgebildeten Anschlage. Dadurch kommt es dann zu einer Drehung des Verriegelungsbolzens, wenn sich der Verriegelungsbolzen im Gehäuse der Verriegelungseinrichtung soweit linear über seinen normalen Arbeitsweg hinaus verschoben hat, daß ein Anschlag des Verriegelungsbolzens zwischen die federnden Ausformungen des Freilaufrings gerät. Der jeweils andere Anschlag unterläuft dann wie beschrieben die federnde Ausformung und es kommt durch die Drehung des Verriegelungsbolzens zu keiner weiteren linearen Verschiebung des Verriegelungsbolzens in dem Gehäuse der Verriegelungseinrichtung.

Dreht der den Verriegelungsbolzen bewegende Antrieb in die jeweils andere Richtung, stößt der Anschlag des Verriegelungsbolzens, der eben noch die federnde Ausformung unterlief, mit seiner Stoßfläche gegen die Stoßfläche einer federnden Ausformung, wodurch die Drehung des Verriegelungsbolzens zum Stillstand kommt und sich der Verriegelungsbolzen in die entgegengesetzte Richtung im Gehäuse der Verriegelungseinrichtung verschiebt.

In einer vorteilhaften Weiterbildung der Erfindung ist vorgesehen, daß der eine Drehung erzeugende Antrieb ein Elektromotor ist, der eine im Verriegelungsbolzen gelagerte Gewindewelle antreibt.

In einer weiteren vorteilhaften Weiterbildung der Erfindung ist vorgesehen, daß der Verriegelungsbolzen aus einem Zuganker und einem Riegel aufgebaut ist. Der Zuganker und der Riegel sind dabei so miteinander verbunden, daß der Zuganker und der Riegel axial ineinander geschoben werden können. Zwischen dem Zuganker und dem Riegel ist eine Druckfeder angeordnet. Zudem ist der Zuganker drehbar im Riegel gelagert, wodurch der Riegel die Drehung des Zugankers im Fall einer Überschreitung des normalen Arbeitsweges des Zugankers nicht ausführt..

In einer weiteren vorteilhaften Weiterbildung der Erfindung ist vorgesehen, daß im Gehäuse der Verriegelungseinrichtung eine Vorrichtung zur Bestimmung der Position des Verriegelungsbolzens angeordnet ist, wobei an dem Zuganker mindestens vorzugsweise ein Permanentmagnet angeordnet ist und in dem Gehäuse der Verriegelungseinrichtung ein Hallsensor angeordnet ist.

Dabei ist in dem Zuganker eine aus Kunststoff gefertigte Gewindemutter angeordnet, wobei die Gewindewelle im Zuganker des Verriegelungsbolzens in der Gewindemutter gelagert ist.

In einer letzten Weiterbildung der Erfindung ist vorgesehen, daß der Verriegelungsbolzen eine drehbare Welle verriegelt, vorzugsweise die drehbare Welle eine Aussparungen aufweisende Lenkwelle eines Kraftfahrzeugs. Die Lenkwelle wird dann verriegelt, wenn bei dem Kraftfahrzeug bei abgezogenem Fahrzeugschlüssel verriegelt ist.

Die beschriebene Verriegelungseinrichtung mit einem zwischen dem Verriegelungsbolzen und dem Gehäuse der Verriegelungseinrichtung angeordneten Freilaufring gewährleistet, daß der den Verriegelungsbolzen auch beim Auftreten einer Störung nicht weiter als vorgesehen in dem Gehäuse der Verriegelungseinrichtung linear verschoben wird.

Im folgenden ist eine Verriegelungseinrichtung mit einem sich im Gehäuse der Verriegelungseinrichtung linear bewegenden, von einem Elektromotor angetriebenen Verriegelungsbolzen, der sich beim Überschreiten seines normalen Arbeitsweges in dem Freilaufring dreht, anhand von einem Ausführungsbeispiel im Zusammenhang mit zwei Figuren dargestellt und erläutert.

Es zeigen:
- Figur 1: eine schematische Darstellung der Verriegelungseinrichtung der Lenksäule eines Personenkraftwagens,
- Figur 2: eine schematische Darstellung des Freilaufrings, in dem sich der aus einem Zuganker und einem Riegel bestehend Verriegelungsbolzen dreht.

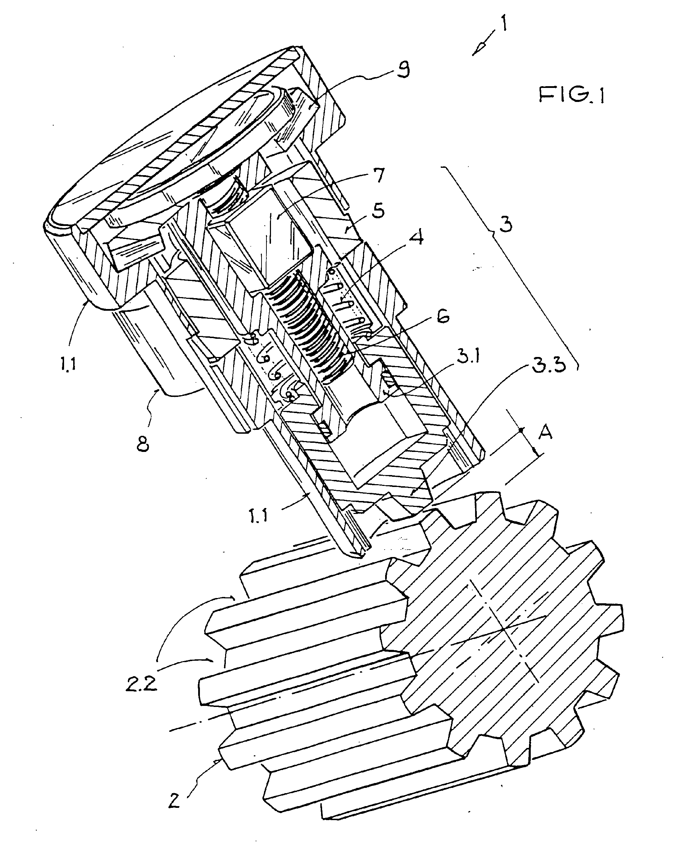

In der Figur 1 ist eine Verriegelungseinrichtung 1 mit einem Verriegelungsbolzen 3 zur Verriegelung einer Aussparungen aufweisenden Lenksäule 2 eines Kraftfahrzeugs dargestellt. Die Verriegelung der Lenksäule 2 erfolgt, wenn der Zündschlüssel vom Zündschloß des Kraftfahrzeugs abgezogen wird. Entsprechend erfolgt die Entriegelung der Lenksäule 2, wenn der Zündschlüssel in das Zündschloß des Kraftfahrzeugs eingesetzt wird.

Der im Gehäuse 1.1 der Verriegelungseinrichtung 1 angeordnete Verriegelungsbolzen 3 ist aus einem Zuganker 3.1 und einem Riegel 3.3 zusammengesetzt, die zueinander verdreht und dabei axial ineinander geschoben werden können, und die durch eine Druckfeder 4 auseinander gedrückt werden. Durch diese Anordnung kann der Zuganker 3.1 ungehindert um seinen Arbeitsweg A verschoben werden, auch wenn der Riegel 3.3 nicht genau über einer Aussparung 2.1 der Lenksäule 2 steht.

Die Verriegelungseinrichtung 1 ist soweit vom Zündschloß des Kraftfahrzeugs entfernt an der Lenksäule 2 montiert, daß der Verriegelungsbolzen 3 von einem Elektromotor 8 bewegt wird, der von einem dem Zündschloß und der Verriegelungseinrichtung 1 zugehörigem Steuergerät angesteuert wird.

Der Elektromotor treibt über ein Kegelzahnrad 9 eine Gewindewelle 6 an, die in einer aus Kunststoff gefertigten Gewindemutter 7 gelagert ist, die in einer Aussparung des Zugankers 3.1 angeordnet ist.

Zum präzisen Anfahren der zwei Positionen "Verriegelt" und "Entriegelt" des Verriegelungsbolzens 3 ist in dem Gehäuse 1.1 der Verriegelungseinrichtung 1 eine nicht dargestellte Vorrichtung zur Bestimmung der Position des Zugankers 3.1 angeordnet, die ein zur Stellung des Zugankers 3.1 proportionales Signal erzeugt. Dieses Signal wird von dem Steuergerät genutzt, um den Elektromotor 8 solange anzusteuern, daß der Zuganker 3.1 jeweils bis in die geforderte Position im Gehäuse 1.1 der Verriegelungseinrichtung 1 fährt, wobei jedes mal der normale Arbeitsweg A zurückgelegt wird. Die Vorrichtung zur Bestimmung der Position des Zugankers 3.1 besteht beispielsweise aus einem am Zuganker 3.1 befestigten Permanentmagnet und einem am Gehäuse 1.1 der Verriegelungseinrichtung 1 befestigten Hallsensor.

Um zu vermeiden, daß die Verriegelungseinrichtung, beispielsweise bei einem Ausfall des Hallsensors, durch ein Verschieben des Zuganker 3.1 über den Arbeitsweg A hinaus schaden nimmt, ist zwischen dem Gehäuse 1.1 und dem Zuganker 3.1 ein aus Kunststoff gefertigter Freilaufring 5 angeordnet.

Prinzipiell könnten der Freilaufring 5 und das Gehäuse 1.1 der Verriegelungseinrichtung 1 als gemeinsames, einteiliges Bauteil hergestellt werden. Dabei bestünde jedoch nicht die Möglichkeit die unterschiedlichen Funktionen der Teile durch die Verwendung unterschiedlicher Materialien zu optimieren.

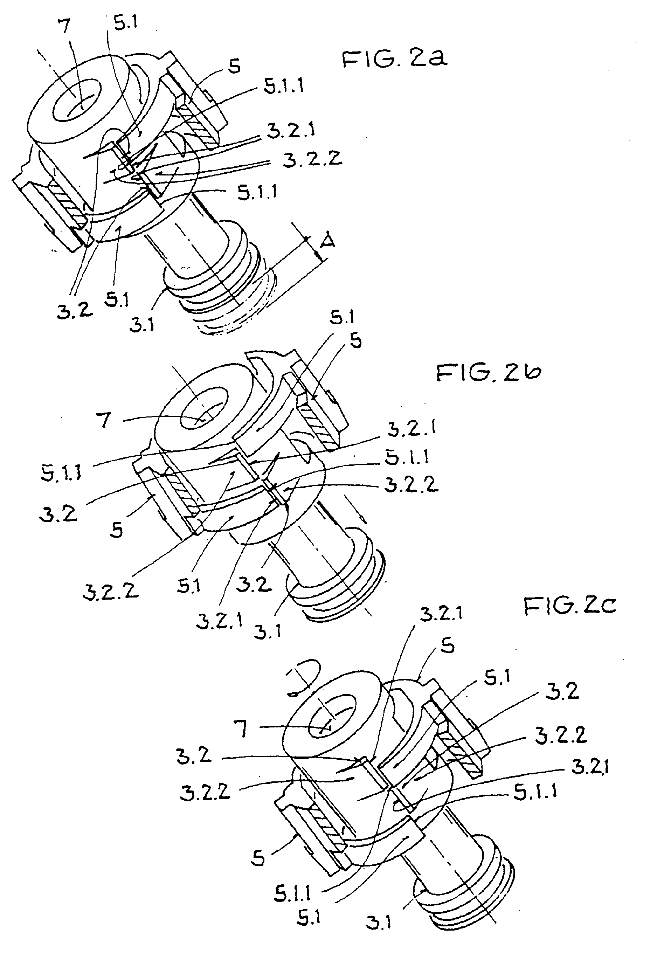

In den Figuren 2a bis 2c sind der Freilaufring 5 und der Zuganker 3.1 für verschiedene Positionen des Zugankers 3.1 dargestellt. Durch die Reibung zwischen der Gewindewelle und der Gewindemutter dient der Freilaufring 5 primär zur Führung des zylindrischen Zuganker 3.1. Dazu sind an dem Zuganker 3.1 Anschläge 3.2 ausgebildet, durch die der Zuganker 3.1 in dem mit dem Gehäuse 1.1 fest verbundenen Freilaufring 5 innerhalb des normalen Arbeitsweges A des Zugankers 3.1 linear geführt wird.

Dazu sind an dem Freilaufring 5 senkrecht zur Achse des Verriegelungsbolzens 3 zwei sich versetzt gegenüberstehende, federnde Ausformungen 5.1 ausgebildet. An dem freien Ende der federnden Ausformung 5.1 ist jeweils eine Stoßfläche 5.1.1 ausgebildet, gegen die an dem Zuganker 3.1 ausgebildete Anschläge 3.2 stoßen.

Die Anschläge 3.2 des Zugankers 3.1 weisen jeweils auf einer Seite eine zur Stoßfläche 5.1.1 der federnden Ausformung 5.1 komplementäre Stoßfläche 3.2.1 auf, so daß eine Drehung des Zugankers 3.1 gegen die federnde Ausformung 5.1 vermieden und der Zuganker 3.1 linear geführt wird.

Die andere Seite der Anschläge 3.2 des Zugankers 3.1 ist jeweils als schiefe Ebene 3.2.2 ausgebildet, die der federnden Ausformung 5.1 nicht entgegenstehende kann, so daß eine Drehung des Zugankers 3.1 nicht vermieden wird.

Der Abstand der versetzt angeordneten, federnden Ausformung 5.1 des Freilaufrings 5 ist größer als die Länge der auf dem Zuganker 3.1 ausgebildeten Anschläge 3.2. Dadurch kommt es genau dann zu einer Drehung des Zugankers 3.1, wenn sich der Zuganker 3.1 im Gehäuse 1.1 der Verriegelungseinrichtung 1 soweit linear verschoben hat, daß einer der beiden Anschläge 3.2 des Zugankers 3.1 zwischen die federnden Ausformungen 5.1 des Freilaufrings 5 gerät.

In der Figur 2a ist der Zuganker 3.1 in der Position "Entriegelt" dargestellt, wobei sich der Zuganker 3.1 an der oberen Position des linearen Arbeitsweges A befindet, in welcher der Riegel nicht in eine Aussparung der Lenksäule greift. Während der Zuganker 3.1 in diese Position läuft, stützt der Zuganker 3.1 das über Gewindewelle und Gewindemutter übertrage Drehmoment mit der Stoßfläche 3.2.1 des unteren Anschlags 3.2 gegen die Stoßfläche 5.1.1 der unteren federnden Ausformung 5.1 des Freilaufrings 5 ab.

In der Figur 2b ist der Zuganker 3.1 in der Position "Verriegelt" dargestellt, wobei sich der Zuganker 3.1 an der unteren Position des linearen Arbeitsweges A befindet, in welcher der Riegel in eine Aussparung der Lenksäule greift. Während der Zuganker 3.1 in diese Position läuft, stützt der Zuganker 3.1 das Drehmoment mit der Stoßfläche 3.2.1 des oberen Anschlags 3.2 gegen die Stoßfläche 5.1.1 der oberen federnden Ausformung 5.1 des Freilaufrings 5 ab.

Figur 2c zeigt den Zuganker 3.1 und den Freilaufring 5, nachdem der Zuganker 3.1 die Position "Verriegelt" angefahren hat, und dabei aufgrund einer Störung den normalen Arbeitswege A überschritten hat.

Dabei gerät der die lineare Führung bewirkende untere Anschlag 3.2 des Zugankers 3.1 zwischen beide federnden Ausformungen 5.1, wodurch das Drehmoment nicht mehr abgestützt wird und sich der Zuganker 3.1 im Freilaufring 5 frei dreht. Während der Drehung unterläuft der Anschlag 3.2 des Zugankers 3.1 die schiefe Ebene 3.2.2 der federnden Ausformung 5.1 des Freilaufrings 5, die sich elastisch verformt und in ihre Ruhestellung zurückschnellt, nachdem sich die als Stoßfläche 3.2.1 ausgebildete Seite der Anschläge 3.2 unter der federnden Ausformung 5.1 weggedreht hat.

Der Riegel 3.3 bleibt aufgrund der drehbaren Lagerung im Zuganker 3.1 immer in einer zu den Aussparungen der Lenksäule parallelen Stellung. Um ein Mitdrehen des Riegels 3.3 aufgrund von Reibung zu verhindern sind im Gehäuse der Verriegelungseinrichtung Führungen ausgebildet, in welche entsprechende Ausbildungen am Riegel 3.3 greifen.

Das der Verriegelungseinrichtung zugeordnete Steuergerät erkennt nun eine Fehlfunktion beispielsweise durch das Überschreiten eines Wertes für die maximale Bestromungsdauer des Elektromotors.

Daraufhin dreht der Elektromotor den Zuganker 3.1 in die jeweils andere Richtung, wodurch der Anschlag 3.2 des Zugankers 3.1, der eben noch unter der federnden Ausformung 5.1 drehte, mit seiner Stoßfläche 3.2.1 gegen die Stoßfläche 5.1.1 der federnden Ausformung 5.1 stößt. Dadurch kommt die Drehung des Zugankers 3.1 zum Stillstand und der Zuganker 3.1 verschiebt sich im Gehäuse der Verriegelungseinrichtung linear in die entgegengesetzte Richtung.

Die erfindungsgemäße Verriegelungseinrichtung 1 mit einem zwischen dem Zuganker 3.1 und dem Gehäuse 1.1 der Verriegelungseinrichtung 1 angeordneten Freilaufring 5 gewährleistet, daß der Elektromotor 8 den aus Zuganker 3.1 und Riegel 3.3 bestehenden Verriegelungsbolzen 3 auch beim Auftreten einer Störung nicht weiter als vorgesehen in dem Gehäuse 1.1 der Verriegelungseinrichtung 1 linear verschiebt.

## Patentansprüche

1. Verriegelungseinrichtung (1) mit einem sich im Gehäuse (1.1) der Verriegelungseinrichtung (1) auf einem Arbeitsweg (A) linear bewegenden Verriegelungsbolzen (3), den ein eine Drehung erzeugender Antrieb bewegt, **dadurch gekennzeichnet, daß** zwischen dem Verriegelungsbolzen (3) und dem Gehäuse (1.1) der Verriegelungseinrichtung (1) ein das Überschreiten des Arbeitsweges (A) verhindernder Freilaufring (5) angeordnet ist.

2. Verriegelungseinrichtung (1) nach Anspruch 1, **dadurch gekennzeichnet, daß** der Freilaufring (5) fest mit dem Gehäuse (1.1) der Verriegelungseinrichtung (1) verbunden ist, daß an dem Freilaufring (5) senkrecht zur Achse des Verriegelungsbolzens (3) zwei sich versetzt gegenüberstehende, federnde Ausformungen (5.1) ausgebildet sind, an deren freiem Ende jeweils eine Stoßfläche (5.1.1) ausgebildet ist, daß an dem Verriegelungsbolzen (3) zwei Anschläge (3.2) ausgebildet sind, wobei jeweils eine Seite der Anschläge (3.2) als eine zur Stoßfläche (5.1.1) der federnden Ausformung (5.1) komplementäre Stoßfläche (3.2.1) ausgebildet ist, und wobei die anderen Seite der Anschläge (3.2) als eine der Stoßfläche (5.1.1) der federnden Ausformung (5.1) nicht entgegenstehende schiefe Ebene (3.2.2) ausgebildet ist, und daß der Abstand der versetzt angeordneten; federnden Ausformung (5.1) größer als die Länge der auf dem Verriegelungsbolzen (3) ausgebildeten Anschlage (3.2) ist.

3. Verriegelungseinrichtung (1) nach Anspruch 1 oder 2, **dadurch gekennzeichnet, daß** der eine Drehung erzeugende Antrieb ein Elektromotor (8) ist, der eine im Verriegelungsbolzen (3) gelagerte Gewindewelle (6) antreibt.

4. Verriegelungseinrichtung (1) nach einem der Ansprüche 1 bis 3, **dadurch gekennzeichnet, daß** der Verriegelungsbolzen-(3) aus einem Zuganker (3.1) und einem Riegel (3.3) aufgebaut ist, daß der Zuganker (3.1) und der Riegel (3.3) so miteinander verbunden sind, daß der Zuganker (3.1) und der Riegel (3.3) axial ineinander zu schieben sind, daß zwischen dem Zuganker (3.1) und dem Riegel (3.3) eine Druckfeder (3.2) angeordnet ist, und daß der Zuganker (3.1) drehbar im Riegel (3.3) gelagert ist.

5. Verriegelungseinrichtung (1) nach Anspruch 4, **dadurch gekennzeichnet, daß** im Gehäuse (1.1) der Verriegelungseinrichtung (1) eine Vorrichtung zur Bestimmung der Position des Verriegelungsbolzens (3) angeordnet ist, wobei an dem Zuganker (3.1) mindestens ein Permanentmagnet angeordnet ist und wobei in dem Gehäuse (1.1) der Verriegelungseinrichtung (1) ein Hallsensor angeordnet ist.

6. Verriegelungseinrichtung (1) nach Anspruch 5, **dadurch gekennzeichnet, daß** in dem Zuganker (3.1) eine aus Kunststoff gefertigte Gewindemutter (7) angeordnet ist, und daß die Gewindewelle (6) im Zuganker (3.1) des Verriegelungsbolzens (3) in der Gewindemutter (7) gelagert ist.

7. Verriegelungseinrichtung (1) nach einem der vorangegangenen Ansprüche, **dadurch gekennzeichnet, daß** der Verriegelungsbolzen (3) eine drehbare Welle verriegelt, daß die drehbare Welle eine Aussparungen (2.1) aufweisende Lenkwelle (2) eines Kraftfahrzeugs ist, und daß die Lenkwelle (2) bei abgezogenem Fahrzeugschlüssel verriegelt ist.
